(19) Europäisches Patentamt / European Patent Office / Office européen des brevets

(11) **EP 3 629 485 B1**

(12) **EUROPEAN PATENT SPECIFICATION**

(45) Date of publication and mention
of the grant of the patent:
**22.06.2022 Bulletin 2022/25**

(51) International Patent Classification (IPC):
**H04B 3/02** *(2006.01)*     **H04B 3/32** *(2006.01)*
**H04M 11/06** *(2006.01)*

(21) Application number: **18197324.9**

(52) Cooperative Patent Classification (CPC):
**H04B 3/02; H04B 3/32; H04M 11/062**

(22) Date of filing: **27.09.2018**

(54) **RATE STEERING ON VECTORED COMMUNICATION LINES**

RATEN-STEUERUNG AUF ÜBERTRAGUNGSLEITUNGEN DIE VEKTORING BENUTZEN

CONTROLE DE DEBIT DE DONNEES SUR DES LIGNES DE COMMUNICATION UTILIZANT VECTORING

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2020 Bulletin 2020/14**

(73) Proprietor: **Nokia Solutions and Networks Oy 02610 Espoo (FI)**

(72) Inventor: **TSIAFLAKIS, Paschalis 2018 Antwerpen (BE)**

(74) Representative: **IP HILLS NV Hubert Frère-Orbanlaan 329 9000 Gent (BE)**

(56) References cited:
**EP-A1- 3 154 205          WO-A1-2017/072765
US-A1- 2016 182 122**

EP 3 629 485 B1

## Description

### Technical Field

Various example embodiments relate to rate steering on vectored communication lines wherein communications are performed during a normal operation interval, NOI, and discontinuous operation interval, DOI, of an upstream and/or downstream time frame.

### Background

Vectoring refers to the pre- or post-compensation of communication signals transmitted over communication lines that are affected by cross-talk, typically because they reside, at least partially, in a same cable binder.

Communication on vectored communication lines is performed by the transmission of time domain symbols during a predefined time frame. Upstream or downstream transmission during a time frame may further be subdivided in a NOI and DOI for allowing power savings. While during the NOI communication symbols are transmitted on all communication lines, during the DOI, communication lines may be idle or quiet thereby allowing power savings in the transmitter and receivers.

Rate steering refers to the steering or distributing of the data rates over each of these communication lines. Such steering may further be performed according to a certain objective function or policy.

One way to achieve rate steering is by disabling data communication over a set of communication lines and tones while sending pre-compensation signals over this set of lines and tones. The pre-compensation signals are selected so as to improve, by constructive interference, the signal-to-noise-ratio of the transmission over the other communication lines for the considered tones. As a result, the data rates of the other communication lines are increased. This technique is also referred to as targeted generalized vectoring, rectangular vectoring, beamforming or coherent combining.

Another way to achieve rate steering is by gain scaling, i.e. by balancing the gain levels of the individual tones by the individual gain coefficients. These gain levels are also referred to as gain scaling coefficients.

US2016182122A1 discloses a method including determining a first set of lines and a second set of lines in a system, obtaining signals to be transmitted over, or received from, the first set of lines and the second set of lines, obtaining normal operation interval (NOI) vectoring coefficients for the second set of lines, determining discontinuous operation interval (DOI) vectoring coefficients for the first set of lines, the DOI vectoring coefficients for the first set of lines and the NOI vectoring coefficients for the second set of lines being part of a vectoring matrix and jointly processing the signals for a discontinuous operation interval using the vectoring matrix.

## Summary

A problem with the above techniques is that they are static, i.e. changing from one rate steering configuration to another requires a recalculation of the vectoring coefficients making these solutions not fit for more dynamic situations.

Amongst others, it is an object of embodiments of this disclosure to alleviate the above shortcoming and to provide a rate steering solution that is flexible and adjustable in a fast and accurate way.

This object is achieved, according to a first example aspect of the present disclosure, by the communication controller according to claim 1.

A time frame is a predefined time duration during which time domain signals are repeatedly transmitted over the communication lines. The joint transmission of the time domain signals may correspond to upstream or downstream transmission. The vectoring coefficients may further correspond to pre-coding coefficients for pre-compensation of the communication signals before the joint transmission or to post-coding coefficients for post-compensation after reception of the jointly transmitted communication signals. During the time frame, two different sets of vectoring coefficients are used. The first set is used for transmission of the first symbols and, thereafter, the second set is used for the transmission of the second symbols. In other words, two different pre- or post-coding matrices are used during the respective NOI and DOI. Furthermore, the sets of vectoring coefficients are characterized by different rate steering configurations, i.e., they achieve a different distribution of data rates over the vectored communication lines. This has the effect that the overall data rate on a communication line is determined by the combination of the applied vectoring configurations and by the number of symbols in the first and second set.

As a result, a first, fast way to achieve rate steering is by selecting the amounts of first and second symbols in the time frame. As this parameter may be adjusted at every time frame, this allows adjusting the rate in a very fast way within a range of rate distributions determined by the first and second rate steering configurations. Such fast adjustments may for example be made based on traffic measurements performed on the communication lines.

A second, slower way to achieve rate steering is by updating the first and second sets of vectoring coefficients. The second way allows setting the boundaries of the rate distributions within which the first, faster way may operate. The updating of the vectoring coefficients may for example be based on traffic expectations on the communication lines.

A further advantage of the above rate steering is that it is compliant with current standards that foresee such a NOI and DOI, e.g. with the currently proposed G.fast standards as published in ITU-T G.9700 and G.9701 and with the upcoming G.mgfast standard. This in contrast to other solutions such as per symbol targeted generalized vectoring wherein symbols during the DOI are kept idle on selected communication lines to improve the performance on other operated communication lines, meaning all tones are disabled for communication over these selected lines during these idle symbol periods. Further to not being standard compliant, this technique further sacrifices performance on the selected communication lines during each idle symbol period in favour of the other operated communication lines while the disclosed rate steering offers finer granularity and more flexibility by allowing simultaneous communication on all communication lines during all the second symbols. As a further result, the disclosed rate steering algorithm achieves higher minimum sustained rates for all communication lines than with the per symbol targeted generalized vectoring technique.

The first and second rate steering configurations may further be determined based on at least one of:

- a rate steering policy maximizing a minimum data rate on the communication lines;
- a rate steering policy maximizing an aggregated data rate of the communication lines;
- a rate steering policy maximizing a harmonic mean of data rates on the communication lines;
- a proportional fair rate steering policy;
- a rate steering policy guaranteeing a target data rate for one or more of the communication lines; and
- a rate steering policy maximizing a minimum of ratios between a data rate and a target data rate of the respective communication lines.

The disclosed rate steering may thus combine two rate steering policies at all times and provide a balance between these two policies by selecting the amount of first and second symbols.

The first and second rate steering configurations may further be achieved by at least one of:

- distributing targeted and supporting roles to tones of the communication lines; and
- adjusting the gain scaling factor of the tones of the communication lines.

According to example use cases, when observing burst peak traffic on a subset of the communication lines, a rate steering configuration accommodating the peaks of the burst peak traffic on the subset of the communication lines as the first or second rate steering configuration is selected, and the amounts of the first and second symbols are selected based on observed bursts in the burst peak traffic.

It is an advantage that peaks in data traffic can be anticipated for by favouring one of the two rate steering configurations while still offering a high sustained rate when no bursts appear.

According to example use cases, when detecting correlated communication lines, rate steering configurations that decouple the correlated communication lines are selected as the first and second rate steering configurations, and a minimum data rate on all communication lines is then maximized by selecting the amounts of first and second symbols.

By the combination of the two decoupling rate steering configurations, the overall minimum data rate will be higher than when applying a single rate steering configuration.

According to example use cases, the first and second rate steering configurations are selected according to a respective first and second fair rate steering policy, and a configurable fairness parameter is provided by selecting the amounts of first and second symbols.

This way, a configurable fairness parameter is provided which can be applied on a per time frame basis without the need for deriving new vectoring coefficients.

According to example embodiments, the communication controller comprises at least one processor and at least one memory including computer program code, the at least one memory and computer program code configured to, with the at least one processor, cause the performance of the communication controller.

According to another example aspect, an access node is disclosed comprising the communication controller according to the first example aspect.

According to a third example aspect, the disclosure relates to the method according to claim 11.

## Brief Description of the Drawings

Some example embodiments will now be described with reference to the accompanying drawings.

Fig. 1 shows an example embodiment of a communication system with rate steering comprising an access node connected by communication lines with terminal nodes;

Fig. 2 shows an example embodiment of a time frame exchanged between an access node and a terminal node;

Fig. 3 shows a plot of achievable date rates for two users of a communication system;

Fig. 4 shows steps for steering the data rates on communication lines of a communication system;

Fig. 5 shows a plot of achievable data rates on communication lines of a communication system by different rate steering techniques;

Fig. 6 shows another plot of achievable data rates on communication lines of a communication system by different rate steering techniques;

Fig. 7 shows an example embodiment of a computing system for performing steps according to various example embodiments.

## Detailed Description of Embodiment(s)

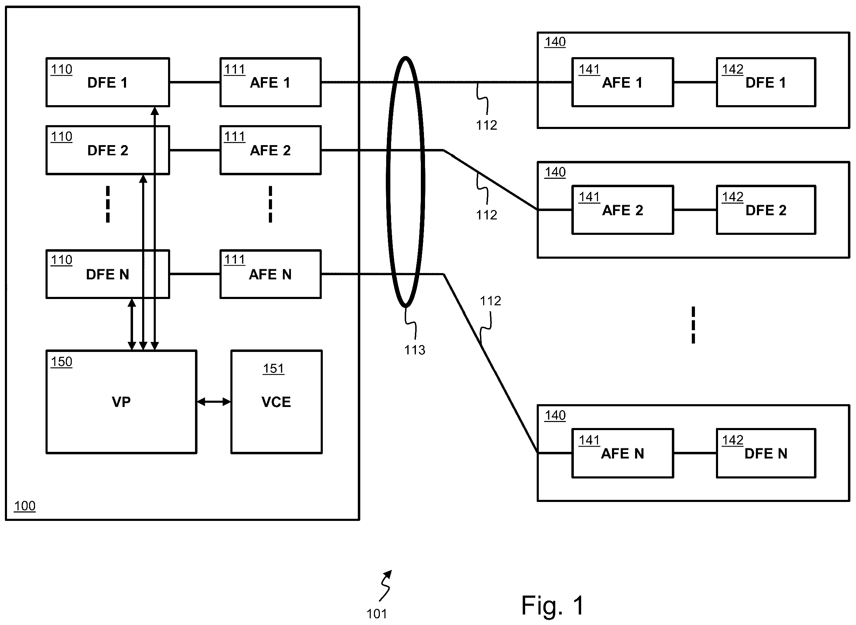

Fig. 1 illustrates an example embodiment of a communication system 101 comprising an access node 100 that comprises a plurality of N digital front ends, DFEs 110, N analogue front ends 111, AFEs, a vectoring processor 150 and a vectoring control entity 151, further referred to as communication controller 151. Access node 100 may be connected to N respective communication lines 112. At the other end, the communication lines 112 may be connected to respective remote nodes 140. A remote node 140 comprises a similar AFE 141 and DFE 142. A DFE 110 and 142 may comprise logic for discrete multi-tone modulation of digital payload data onto a multitude of K frequency carriers or tones and, vice versa, for discrete multi-tone demodulation of digital payload data from a multitude of K frequency carriers or tones. The frequency domain representation of data may also be referred to as tone data. A DFE 110 and 142 further comprises logic for converting tone data to time domain data, i.e. to symbols, and vice versa, for converting time domain data to tone data. A DFE 110 and 142 may be implemented on a digital signal processor, DSP. An AFE 111, 141 converts digitally represented time domain data to an analogue signal and transmits the analogue signal onto the respective transmission line 112. Vice versa, an AFE 111, 141, also converts an analogue signal received from a respective transmission line 112 to a digitally represented time domain signal, i.e. symbol. An AFE may also be referred to as a transceiver, as a transmitter when transmitting, and as a receiver when receiving. When both access node 100 and terminal nodes 140 comprise transmission and reception logic, they are both said to be configured for bidirectional communication. Access node 100 may further be configured to perform multi-user full-duplex, FDX, communication with remote devices 140 when those devices support such full-duplex communication, or to perform time-division duplexed, TDD, communication when the remote devices support TDD communication. Communication system 101 comprising access node 100, communication lines 112 and remote devices 140 may thus also operate according to a mixture of FDX operated lines and TDD operated lines.

Because transmission lines 112 may exhibit cross-talk, for example because they are bundled together (113), signals may couple from one communication line onto another communication line thereby disturbing each other. For compensation of upstream far-end cross-talk, US-FEXT, and downstream far-end cross-talk, DS-FEXT, and for cancellation of near-end cross-talk initiated at the access node or operator side, O-NEXT, the access node 100 may comprise a vectoring processor 150. Vectoring processor 150 then pre-compensates the communication signals transmitted by the access node 100 such that non-disturbed versions of the communication signals are received by the remote devices 140. Such pre-compensation may be performed in the frequency domain by a precoding matrix comprising cross-talk pre-compensation coefficients, i.e. vectoring coefficients. Vectoring processor 150 may further post-compensate the communication signals received from the remote nodes 140 such that non-disturbed versions of the communication signals are received by the access node 100. Such post-compensation may be performed in the frequency domain by a postcoding matrix comprising cross-talk post-compensation coefficients, i.e. vectoring coefficients. Vectoring processor 150 may further perform cancellation for O-NEXT from communication signals received by the access node 100 from the remote devices 140. Such O-NEXT cancellation may be performed in the frequency domain by an echo and NEXT cancellation matrix comprising echo-NEXT-cancellation coefficients, using knowledge of the communication signals that are transmitted by the access node 100.

To enable the above described cross-talk mitigation, the communication signals exchanged between the access node 100 and remote devices 140 over the respective communication lines are jointly coordinated within the communication system 100, i.e., transmission of the time domain symbols by both the access node 100 and remote devices 140 is coordinated in time such that characterization and mitigation of the cross-talk on each of those signals is possible. Control of this joint-coordination is performed by communication controller 151, i.e., communication controller 151 may be configured to characterize the cross-talk channels and to derive therefrom the vectoring coefficients for vectoring processor 150, the transmission power settings for the transmitters of remote devices 140 and the echo scaling coefficients for performing echo cancelation in each of the transceivers 111, 141. Characterization of cross-talk channels may for example be performed by the communication controller 151 by estimating the cross-talk channels based on predetermined cross-talk probing sequences that are sent by the transmitters over the communication lines. By then measuring the received probing sequences, a cross-talk channel may be derived by correlating the measured probing sequences to the known transmitted probing sequences.

Communication system 101 may for example correspond to a Digital Subscriber Line communication system. The communication lines 112 may then be operated according to the G.fast DSL protocol standard published as ITU-T G.9700 and G.9701 and/or according to a full-duplex DSL protocol such as for example currently proposed in the G.mgfast project of the ITU-T SG15.

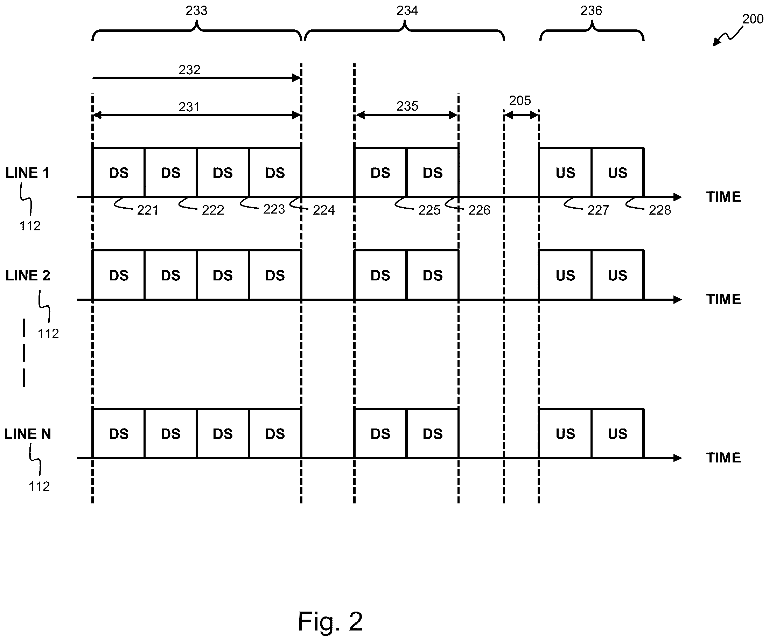

Fig. 2 illustrates a structure of a time frame 200 defining the scheduling of the joint-transmission of downstream time domain symbols 221 to 226 and upstream time domain symbols 227-228 over communication lines 112. Downstream transmission is divided into two time intervals, a normal operation interval, NOI, 233 and a discontinuous operation interval, DOI, 234. During the NOI 233 downstream symbols 221-224 are transmitted according to a first rate steering configuration, i.e. downstream symbols 221-224 are compensated for cross-talk according to a first set of vectoring coefficients. The number of symbols 231 in the NOI is configurable by the communication controller 151, for example a parameter 232 defining the end of the NOI interval and, hence, the beginning of the DOI interval. During the DOI 234 downstream symbols 225-226 are transmitted according to a second rate steering configuration, i.e. downstream symbols 225-226 are compensated for cross-talk according to a second set of vectoring coefficients. Also, the number of symbols 235 in the DOI is configurable, for example by the same parameter 232 thereby defining the ratio between the number of symbols in the NOI and the DOI. Optionally, one or more quiet symbols may be introduced at the beginning or the end of the DOI for all communication lines. Time frame 200 may further comprise a time interval 236 for the transmission of the upstream symbols 227-228. An idle time 205 may further separate the downstream and upstream interval 236 for avoiding interference between upstream and downstream transmission. The upstream time interval 236 may further also be subdivided by a NOI and DOI. Rate steering as described below for the downstream NOI and DOI may similarly be applied in the NOI and DOI of the upstream communication interval. Data communication within communication system 101 is characterized by repeated time frames 200. By selecting the NOI and DOI configuration as described above, both the NOI and DOI share a common configuration for all communication lines, i.e. the amount and position of the second symbols is common across the communication lines.

When operating according to G.fast, the time frame 200 of Fig. 2 may be obtained by fixing the transmission budget, TBUDGET, which corresponds to the total number of allocated symbols within the combined NOI and DOI; by fixing the number of quiet symbols inserted at the beginning of the DOI, referred to as TA in G.fast, preferably fixing it to zero; and by only keeping the number of symbols in the NOI, the TTR 232 as a configurable parameter. In other words, the communication lines share the same DOI configuration with respect to the amount and position of the second symbols. To this respect, controller 151 may comprise circuitry for dynamic resource allocation, DRA, functionality that determines the downstream and upstream transmission opportunity for each time-division duplexing, TDD, frame including the above NOI and DOI parameters.

By the definition of the time frame according to Fig. 2, the data rate on the communication lines may be steered in two ways: i) in a fast way by choosing the number of symbols in the NOI and DOI of a time frame allowing to select the distribution of the data rates by configurable steps between the distribution according to the first and second rate steering policies; ii) in a slower way by updating the one or both the rate steering configurations.

The first and second rate steering configurations applied during the respective NOI 233 and DOI 234 characterize a respective first and second distribution of data rates over the vectored communication lines. In other words, by selecting a different set of vectoring coefficients according to a different constraint or target, the data rates are differently distributed over the communication lines. Different constraints or targets may be imposed based on rate steering policies. For example any one or any combination of the following policies may be imposed in order to obtain a rate steering configuration and, thus, a set of vectoring coefficients: i) a policy maximizing a minimum data rate on all communication lines; ii) a policy maximizing an aggregated data rate of all communication lines; iii) a policy maximizing a harmonic mean of data rates on all communication lines; iv) a proportional fair rate steering policy; v) a policy guaranteeing a target data rate for one or more of the communication lines; and vi) a policy maximizing a minimum of ratios between a data rate and a target data rate of the respective communication lines.

In the art, the term Multi-line Rate Objectives, MRO, is sometimes used to indicated rate steering or the related rate steering policy. In the context of MRO, different rate steering policies may be defined according to a set of parameters. For instance, an MRO may relate to per-line target data rates that one wants to achieve, or different parameterized objective functions that one wants to optimize and that may be configured with e.g. a fairness parameter wherein one extreme value of that parameter may correspond to maximizing the aggregate of data rates of the communication lines (max sum) and the other extreme value of that parameter may correspond to maximizing the minimum data rate of all communication lines (max min). In between values for the fairness parameter then impose an intermediate fair distribution of data rates.

To achieve a certain rate steering configuration according to a certain rate steering policy, different techniques may be used. For example, the tones within the symbols may be assigned with a target role or supporting role thereby favouring target tones in expense of the supporting tones. Alternatively, or complementary, a rate steering configuration may be achieved by adjusting the gain scaling factor of the tones of the communication lines.

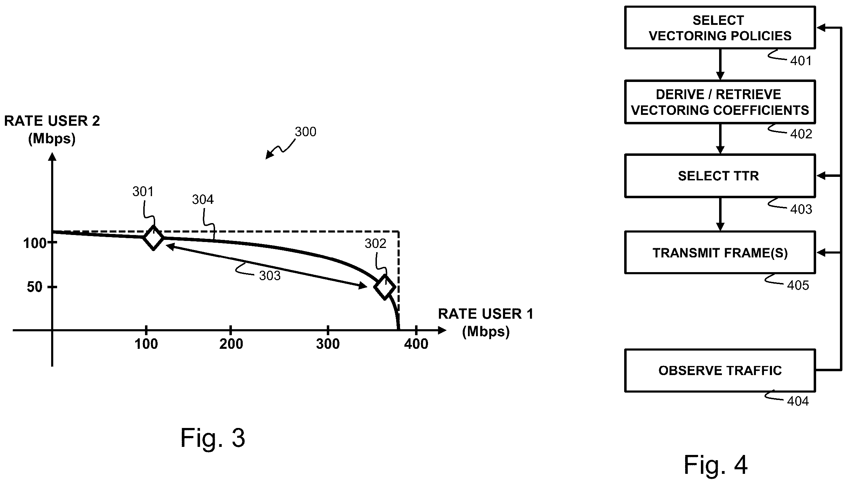

Fig. 4 illustrates steps performable by communication controller 151 for steering data rates on communication lines 112 according to an example embodiment. The steps may be continuously performed during the operation of the communication lines 112 to adapt to changing user demands on the different lines or to an updated configuration of the lines, e.g. by the network operator. In step 401, two rate steering configurations are selected, a first rate steering configuration for use during the NOI and a second rate steering configuration for use during the DOI. The selection may be based on observed traffic or traffic demands on the different communication lines. The selection 401 may also be part of a configuration of communication system 101. Then, communication controller 151 proceeds to the next step 402 in which the vectoring coefficients are derived for the two selected rate steering configurations. As the two sets of vectoring coefficients will be used alternately during the NOI and DOI, the sets may be stored in a memory within the access node 100, e.g. in a swap memory of the vectoring processor 150.

Fig. 3 shows a plot 300 illustrating the effect of the two rate steering policies for an example with two users. A first rate steering configuration 301 is based on a policy that maximizes the minimum data rate of all communication lines. The second rate steering configuration 302 is based on a policy that maximizes the sum of the rates of all communication lines 112. The solid curve 304 illustrates all possible data rate distributions for the two considered communication lines from which the first and second rate steering configuration are selected.

In a step 403, the communication controller 151 selects the number of symbols 231, 235 within the NOI and the DOI and, thus, the number of symbols transmitted according to the first and second rate steering policy. By this selection, the communication controller may select a rate distribution between the two selected rate steering policies, e.g. any rate 303 between rate distributions 301 and 302. Thereafter, the communication controller 151 proceeds to step 405 and starts the transmission of one or more of the time frames 200. Communication controller 151 may further perform a traffic monitoring or observing step 404 in which the actual traffic on each of the communication lines 112 is monitored. Depending on the observed traffic, the communication controller may decide to i) continue the transmission 405 according to the configured vectoring policies and selected number of symbols; ii) update the selected number of symbols according to step 403 to select a new working point within 303; iii) return to step 401 and update the vectoring policies. Updating the number of symbols according to step 403 may be performed on a per time frame basis or a number of time frames and thus be considered as a fast rate adaptation loop. Updating the vectoring policies and associated vectoring coefficients takes a longer time and may be considered as a slow rate adaptation loop.

The deriving of the vectoring coefficients according to step 402 may further be performed offline and stored in a library. This further reduces the updating time under steps 401 and 402 when rate steering policies already stored in the library are selected.

USE CASE 1

In a cable binder 113 with multiple broadband users 140 only a small subset of users may be active with large amounts of traffic appearing in bursts such as generated by BitTorrent applications, large software updates, online video or audio, etc. More general, a limited set of users requires a large data rate; this set of users does not change over a longer time period ranging from seconds to minutes or even hours; and the users within this set are active in bursts. Such traffic may be observed or measured by communication controller 151 during the observation step 404. When observing such traffic, communication controller 151 may select, according to step 401, the first rate steering configuration for use during the NOI 233 based on a policy wherein all users are provided with maximum sustained data rates, and select the second rate steering configuration for use during the DOI 234 based on a policy wherein the subset of users are assigned with larger data rates for accommodating the bursts of large data traffic. Thereupon, communication controller 151 continuously adapts the number of first and second symbols, e.g. by using the TTR parameter, based on the observed bursts of data traffic by the subset of users.

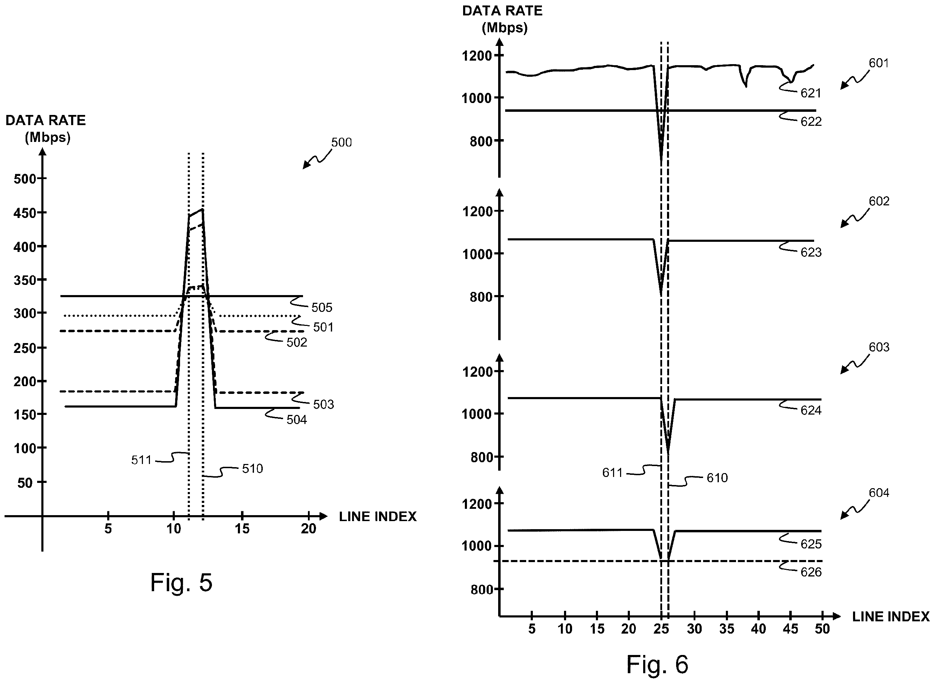

Fig. 5 illustrates this use case by a plot 500 of the configured data rates as a function of the line index, i.e. the data rates for the different communication lines 112. Line indexes 510 and 511 correspond to the lines with the observed bursts of data traffic. The following curves are shown:

- curve 505 illustrates the data rates obtained by the first rate steering configuration based on the policy that maximizes the minimum data rate on all communication lines;
- curve 504 illustrates the data rates obtained by the second rate steering configuration based on the policy that maximizes the rates for communication lines 510 and 511 while ensuring a minimum data rate of 160Mbps on all other lines;
- curve 501 illustrates the data rates for the case wherein 24 symbols are transmitted during the NOI and 4 symbols are transmitted during the DOI;
- curve 503 illustrates the data rates for the case wherein 4 symbols are transmitted during the NOI and 24 symbols are transmitted during the DOI;
- curve 502 illustrates the data rates for an alternative technique wherein per symbol generalized vectoring is used based on the first rate steering policy.

From Fig. 5 it may be concluded that the rate steering mechanism according to curve 501 is superior to that of curve 502 as it offers the same peak performance for communication lines 510 and 511 while offering a higher sustained data rate for the other communication lines. Put otherwise, for a same sustained rate on the other communication lines, the rate steering mechanism according to USE CASE 1 provides a higher peak rate for communication lines 510 and 511 compared to per symbol generalized vectoring.

USE CASE 2

A rate steering policy that maximizes the minimum rates may be a key static configuration feature for network operators. However, this policy may significantly decrease the overall performance of all lines. This situation is illustrated in the first subplot 601 of Fig. 6 wherein Fig. 6 depicts several date rate performances for a 48-pair cable binder. Curve 621 shows the data rates on all communication lines for a single rate steering configuration based on a policy that maximizes the sum of the data rates and curve 622 shows the data rates on lines for a single rate steering configuration based on a policy that maximizes the minimum sustained data rate. Subplot 601 further shows that, to obtain the minimum sustained rate of 925Mbps for all lines, all lines sacrifice up to 200Mbps except lines 611 and 610.

The communication controller 151 may derive that the bad performance of lines 610 and 611 is due to a correlation between the two lines. Due to the duality gap that this correlation is causing, the issue cannot be completely resolved with a single set of vectoring coefficients, even not when using much more complex Lagrange multiplier based algorithms for deriving the vectoring coefficients. To solve the problem, the communication controller 151 derives under steps 401, 402 two separate rate steering configurations 623, 624 and, hence, vectoring coefficients that decouple the correlated lines. The first rate steering configuration 623 decouples line 611 to obtain a sustained rate of 1096Mbps for all lines except for line 611 with a sustained rate of 790Mbps. Similarly, the second rate steering configuration 624 decouples line 610 to again obtain a sustained rate of 1096Mbps except now for line 610 with again now a sustained rate of 790Mbps. Thereafter, the two rate steering configurations are combined by choosing during step 403 an appropriate value for the number of first and second symbols during the NOI 233 and DOI 234. The resulting rate distribution 625 is shown in subplot 604 wherein the sustained rate is 1060Mbps for all lines except for lines 610 and 611 which have a sustained rate of 925. As a result, the obtained combined rate distribution 625 is better than the single rate distribution 622.

This use case may further be extended to use cases with multiple sets of correlated communication lines. The first line of each of the sets may then be boosted by a first rate steering configuration during the NOI and the second line of each of the sets may then be boosted by a second rate steering configuration during the DOI. This way the performance of lines operated according to a policy that maximizes the minimum rates is improved.

USE CASE 3

Different cable binders 113 may need to be operated according to a different static fairness rate steering policy. A proper choice is however not always straightforward. For example, the policy that maximizes the minimum rate may result in a bad performance. By the combined rate steering according to the above example embodiments, the communication controller 151 may determine the optimal fairness strategy depending on the observed traffic during step 404. Referring to Figure 3 wherein the first rate steering configuration 301 is based on the policy maximizing the minimum rate and the second rate steering configuration 302 is based on the policy with the highest sum of rates, the points on the line 303 between these two operating points may be configured according to the above step 403. These points 301, 302 are close to the boundary of the rate region 304 and thus reasonably close' to the other fair rate steering configurations, i.e. rate steering configurations with a value of fairness parameter p between 1 (maximum sum of rates policy 301) and minus infinity (maximized minimum rate policy 302). Configurations of different fairness parameters may therefore by approximated by varying the TTR parameter according to step 403. By dynamically selecting the optimal TTR parameter in step 403 according to the observed traffic in step 404, the optimal approximated fairness policy may be selected. By the above fairness configuration, a network operator does not need to define power mean fairness configurations thereby simplifying the access network management.

One function that may be considered for determining a rate steering configuration based on a certain policy is the below general-purpose power mean utility function A(R,p). Vectoring coefficients may then be selected so as to maximize the vector of rates R ≥ 0 according to this function, and for a given fairness parameter p that defines the policy.

$$A(\boldsymbol{R}, p) = \left( \frac{1}{N} \sum_{k=1}^{N} (R_k)^p \right)^{1/p}$$

This function is well-defined or can be extended to a well-defined meaning for any real value $-\infty \le p \le \infty$. For $p \ge 1$, this function (without the 1/ N factor) is known as the vector p-norm, with p = 2 representing the usual Euclidian distance. For rate steering, it primarily makes sense for $p \le 1$, where the function is concave, in keeping with the principle of diminishing returns. These following values for p are of particular interest:

$$p = 1: \qquad A(\boldsymbol{R}, 1) = \frac{1}{N} \sum_{k=1}^{N} R_k \,,$$

i.e. the usual arithmetic mean which relates to sum rate and, hence, no fairness;

$$p = -1: \ A(\boldsymbol{R}, -1) = \frac{N}{\sum_k R_k^{-1}} \,,$$

i.e. the harmonic mean which relates to the "soft min" and, hence, to intermediate fairness; and

$$p = -\infty\colon A(\boldsymbol{R}, -\infty) = \min_{k}\{R_k\},$$

i.e. the minimum component which relates to an extreme fairness.

In the cases where p ≤ 0, the formulas are not well-defined when some of the rates are equal to zero, but then the formula can be extended continuously by the following rule: *for p ≤ 0; A(**R**,p) = 0 if* $R_k$ = 0, for all k. Finite values of p less than zero may be regarded as a "soft-min" utility function. Such soft-min utility functions only have a positive value when all users have non-zero rates. When comparing two rate vectors, the soft-min utility emphasizes the smallest rate components but does not completely ignore the others, i.e. provides intermediate fairness. As p gets more negative, the function becomes more and more similar to a hard minimum. By choosing an appropriate negative value of p, an appropriate balance/fairness can be achieved between high and low rate users.

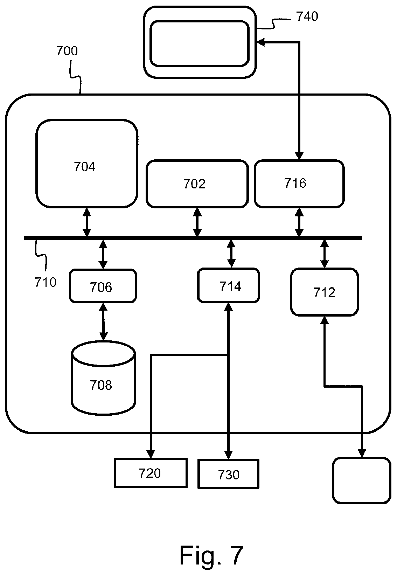

Fig. 7 shows a suitable computing system 700 for implementing the network controller 151 according to the above example embodiments. Computing system 700 may in general be formed as a suitable general-purpose computer and comprise a bus 710, a processor 702, a local memory 704, one or more optional input interfaces 714, one or more optional output interfaces 716, a communication interface 712, a storage element interface 706, and one or more storage elements 708. Bus 710 may comprise one or more conductors that permit communication among the components of the computing system 700. Processor 702 may include any type of conventional processor or microprocessor that interprets and executes programming instructions. Local memory 704 may include a random-access memory (RAM) or another type of dynamic storage device that stores information and instructions for execution by processor 702 and/or a read only memory (ROM) or another type of static storage device that stores static information and instructions for use by processor 702. Input interface 714 may comprise one or more conventional mechanisms that permit an operator or user to input information to the computing device 700, such as a keyboard 720, a mouse 730, a pen, voice recognition and/or biometric mechanisms, a camera, etc. Output interface 716 may comprise one or more conventional mechanisms that output information to the operator or user, such as a display 740, etc. Communication interface 712 may comprise any transceiver-like mechanism such as for example one or more Ethernet interfaces that enables computing system 700 to communicate with other devices and/or systems. The communication interface 712 of computing system 700 may be connected to such another computing system by means of a local area network (LAN) or a wide area network (WAN) such as for example the internet.

Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage element(s) 708 above is/are described as a local disk, in general any other suitable computer-readable media such as a removable magnetic disk, optical storage media such as a CD or DVD, -ROM disk, solid state drives, flash memory cards, ... could be used. Computing system 700 could thus correspond to the network controller 151 of the above example embodiments.

As used in this application, the term "circuitry" or "controller" may refer to one or more or all of the following:

(a) hardware-only circuit implementations such as implementations in only analog and/or digital circuitry and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry or controller applies to all uses of this term in this application, including in any claims. As a further example, as used in this application, the term circuitry or controller also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A communication controller (151) for controlling communications over vectored communication lines (112); wherein the communication controller is further configured to derive (402) first and second sets of vectoring coefficients according to respective first and second rate steering configurations (301 302) for coordinating joint transmission of respective first symbols (221-224) during a normal operation interval (233), NOI, of a time frame (200) using the first set of vectoring coefficients and second symbols (225, 226) during a discontinuous operation interval (234), DOI, of the time frame using the second set of vectoring coefficients; and wherein the amount and position of the second symbols in the time frame are common across the communication lines; and wherein the first and second rate steering configurations (301 302) achieve a respective first and second distribution of data rates over the vectored communication lines.

2. The communication controller (151) according to claim 1 further configured to steer the data rates by selecting (403) the amounts (231, 235) of first and second symbols in the time frame based on traffic measurements on the communication lines.

3. The communication controller (151) according to claim 1 further configured to steer the data rates by updating (401) the first and second sets of vectoring coefficients based on traffic expectations on the communication lines.

4. The communication controller (151) according to claim 1 wherein the first and second rate steering configurations are determined based on at least one of:

   - a rate steering policy maximizing a minimum data rate on the communication lines;
   - a rate steering policy maximizing an aggregated data rate of the communication lines;
   - a rate steering policy maximizing a harmonic mean of data rates on the communication lines;
   - a proportional fair rate steering policy;
   - a rate steering policy guaranteeing a target data rate for one or more of the communication lines; and
   - a rate steering policy maximizing a minimum of ratios between a data rate and a target data rate of the respective communication lines.

5. The communication controller according to claim 1 wherein the first and second rate steering configurations are achieved by at least one of:

   - distributing targeted and supporting roles to tones of the communication lines; and
   - adjusting the gain scaling factor of the tones of the communication lines.

6. The communication controller (151) according to claim 1 further configured to, when observing burst peak traffic on a subset of (510, 511) the communication lines, selecting a configuration accommodating the peaks of the burst peak traffic on the subset of the communication lines as the first or second rate steering configuration, and to select the amounts of the first and second symbols based on observed bursts in the burst peak traffic.

7. The communication controller (151) according to claim 1 further configured to, when detecting correlated communication lines (610, 611), selecting rate steering configurations decoupling the correlated communication lines as the first and second rate steering configuration, and to maximize a minimum data rate (626) on all communication lines by the selecting the amounts (231, 235) of first and second symbols.

8. The communication controller (151) according to claim 1 further configured to select the first and second rate steering configurations according to a respective first and second fair rate steering policy, and to provide a configurable fairness parameter by selecting the amounts (231, 235) of first and second symbols.

9. The communication controller (151) according to any one of the preceding claims comprising at least one processor (702) and at least one memory (704) including computer program code, the at least one memory and computer program code configured to, with the at least one processor, cause the performance of the communication controller (151).

10. An access node (100) comprising the communication controller according to any one of the preceding claims.

11. A method for controlling communications over vectored communications lines comprising deriving (402) first and second sets of vectoring coefficients according to respective first and second rate steering configurations (301 302) for coordinating joint transmission of respective first symbols (221-224) during a normal operation interval (233), NOI, of a time frame (200) using the first set of vectoring coefficients and second symbols (225, 226) during a discontinuous operation interval (234), DOI, of the time frame using the second set of vectoring coefficients on vectored communication lines; and wherein the amount and position of the second symbols in the time frame are common across the communication lines; and wherein the first and second rate steering configurations (301 302) achieve a respective first and second distribution of data rates over the vectored communication lines.

**Patentansprüche**

1. Kommunikationssteuerung (151) zum Steuern einer Kommunikation über vektorisierte Kommunikationsleitungen (112); wobei die Kommunikationssteuerung ferner dazu ausgelegt ist, einen ersten und einen zweiten Satz von Vektorkoeffizienten gemäß einer ersten und einer zweiten Ratensteuerauslegung (301 302) zum Koordinieren einer gemeinsamen Übertragung von jeweiligen ersten Symbolen (221-224) während eines normalen Betriebsintervalls (233), NOI, eines Zeitrahmens (200) unter Verwendung des ersten Satzes von Vektorkoeffizienten und zweiten Symbolen (225, 226) während eines diskontinuierlichen Betriebsintervalls (234), DOI, des Zeitrahmens unter Verwendung des zweiten Satzes von Vektorkoeffizienten abzuleiten (402); und wobei die Menge und die Position der zweiten Symbole im Zeitrahmen über die Kommunikationsleitungen gemeinsam sind und wobei die erste und die zweite Ratensteuerauslegung (301 302) eine jeweilige erste und zweite Verteilung von Datenraten über die vektorisierten Kommunikationsleitungen erreichen.

2. Kommunikationssteuerung (151) nach Anspruch 1, die ferner dazu ausgelegt ist, die Datenraten durch Auswählen (403) der Mengen (231, 235) der ersten und der zweiten Symbole im Zeitrahmen auf Basis von Verkehrsmessungen auf den Kommunikationsleitungen zu steuern.

3. Kommunikationssteuerung (151) nach Anspruch 1, die ferner dazu ausgelegt ist, die Datenraten durch Aktualisieren (401) des ersten und des zweiten Satzes von Vektorkoeffizienten auf Basis von Verkehrserwartungen auf den Kommunikationsleitungen zu steuern.

4. Kommunikationssteuerung (151) nach Anspruch 1, wobei die erste und die zweite Ratensteuerauslegung auf Basis von mindestens einem von Folgendem bestimmt werden:

   - einer Ratensteuerrichtlinie, die eine minimale Datenrate auf den Kommunikationsleitungen maximiert;
   - einer Ratensteuerrichtlinie, die eine aggregierte Datenrate der Kommunikationsleitungen maximiert;
   - einer Ratensteuerrichtlinie, die ein harmonisches Mittel von Datenraten auf den Kommunikationsleitungen maximiert;
   - einer proportional fairen Ratensteuerrichtlinie;
   - einer Ratensteuerrichtlinie, die eine Solldatenrate für eine oder mehrere der Kommunikationsleitungen garantiert; und
   - einer Ratensteuerrichtlinie, die ein Minimum von Verhältnissen zwischen einer Datenrate und einer Solldatenrate der jeweiligen Kommunikationsleitungen maximiert.

5. Kommunikationssteuerung nach Anspruch 1, wobei die erste und die zweite Ratensteuerauslegung durch mindestens eines von Folgendem erreicht werden:

   - Verteilen von Soll- und unterstützenden Rollen an Töne der Kommunikationsleitungen; und
   - Anpassen des Verstärkungsskalierungsfaktors der Töne der Kommunikationsleitungen.

6. Kommunikationssteuerung (151) nach Anspruch 1, die, wenn auf einem Untersatz (510, 511) der Kommunikationsleitungen ein Burstspitzenverkehr beobachtet wird, ferner dazu ausgelegt ist, eine Auslegung, die die Spitzen des Burstspitzenverkehrs auf dem Untersatz der Kommunikationsleitungen enthält, als die erste oder die zweite Ratensteuerauslegung auszuwählen und die Mengen der ersten und der zweiten Symbole auf Basis von beobachteten Bursts im Burstspitzenverkehr auszuwählen.

7. Kommunikationssteuerung (151) nach Anspruch 1, die, wenn korrelierte Kommunikationsleitungen (610, 611) detektiert werden, ferner dazu ausgelegt ist, Ratensteuerauslegungen, die die korrelierten Kommunikationsleitungen entkoppeln, als die erste und die zweite Ratensteuerauslegung auszuwählen und eine minimale Datenrate (626) auf allen Kommunikationsleitungen durch das Auswählen der Mengen (231, 235) von ersten und zweiten Symbolen zu maximieren.

8. Kommunikationssteuerung (151) nach Anspruch 1, die ferner dazu ausgelegt ist, die erste und die zweite Ratensteuerauslegung gemäß einer ersten und einer zweiten fairen Ratensteuerrichtlinie auszuwählen und durch Auswählen der Mengen (231, 235) der ersten und der zweiten Symbole einen auslegbaren Fairnessparameter bereitzustellen.

9. Kommunikationssteuerung (151) nach einem der vorhergehenden Ansprüche, die mindestens einen Prozessor (702) und mindestens einen Speicher (704), der Computerprogrammcode beinhaltet, umfasst, wobei der mindestens eine Speicher und der Computerprogrammcode dazu ausgelegt sind, mit dem mindestens einen Prozessor die Ausführung der Kommunikationssteuerung (151) zu bewirken.

10. Zugangsknoten (100), der die Kommunikationssteuerung nach einem der vorhergehenden Ansprüche umfasst.

11. Verfahren zum Steuern einer Kommunikation über vektorisierte Kommunikationsleitungen, das das Ableiten (402) eines ersten und eines zweiten Satzes von Vektorkoeffizienten gemäß einer ersten und einer zweiten Ratensteuerauslegung (301 302) zum Koordinieren einer gemeinsamen Übertragung von jeweiligen ersten Symbolen (221-224) während eines normalen Betriebsintervalls (233), NOI, eines Zeitrahmens (200) unter Verwendung des ersten Satzes von Vektorkoeffizienten und zweiten Symbolen (225, 226) während eines diskontinuierlichen Betriebsintervalls (234), DOI, des Zeitrahmens unter Verwendung des zweiten Satzes von Vektorkoeffizienten auf vektorisierten Kommunikationsleitungen umfasst; und wobei die Menge und die Position der zweiten Symbole im Zeitrahmen über die Kommunikationsleitungen gemeinsam sind und wobei die erste und die zweite Ratensteuerauslegung (301 302) eine jeweilige erste und zweite Verteilung von Datenraten über die vektorisierten Kommunikationsleitungen erreichen.

**Revendications**

1. Dispositif de commande de communication (151) pour la commande de communications sur des lignes de communication vectorisées (112) ; dans lequel le dispositif de commande de communication est en outre configuré pour déduire (402) des premier et second ensembles de coefficients de vectorisation selon des première et seconde configurations d'orientation de débit (301 302) respectives pour la coordination d'une émission conjointe de premiers symboles (221 à 224) respectifs pendant un intervalle de fonctionnement normal (233), NOI, d'une trame temporelle (200) à l'aide du premier ensemble de coefficients de vectorisation et de seconds symboles (225, 226) pendant un intervalle de fonctionnement discontinu (234), DOI, de la trame temporelle à l'aide du second ensemble de coefficients de vectorisation ; et dans lequel la quantité et la position des seconds symboles dans la trame temporelle sont communes entre les lignes de communication ; et dans lequel les première et seconde configurations d'orientation de débit (301 302) réalisent une première et une seconde distribution respectives de débits de données sur les lignes de communication vectorisées.

2. Dispositif de commande de communication (151) selon la revendication 1 configuré en outre pour orienter les débits de données par la sélection (403) des quantités (231, 235) de premiers et seconds symboles dans la trame temporelle sur la base de mesures de trafic sur les lignes de communication.

3. Dispositif de commande de communication (151) selon la revendication 1 configuré en outre pour orienter les débits de données par la mise à jour (401) des premier et second ensembles de coefficients de vectorisation sur la base de prévisions de trafic sur les lignes de communication.

4. Dispositif de commande de communication (151) selon la revendication 1 dans lequel les première et seconde configurations d'orientation de débit sont déterminées sur la base d'au moins une politique parmi :

   - une politique d'orientation de débit maximisant un débit de données minimal sur les lignes de communication ;
   - une politique d'orientation de débit maximisant un débit de données agrégé des lignes de communication ;
   - une politique d'orientation de débit maximisant une moyenne harmonique de débits de données sur les lignes de communication ;
   - une politique d'orientation de débit proportionnelle équitable ;

- une politique d'orientation de débit garantissant un débit de données cible pour l'une ou plusieurs des lignes de communication ; et
- une politique d'orientation de débit maximisant un minimum de rapports entre un débit de données et un débit de données cible des lignes de communication respectives.

5. Dispositif de commande de communication selon la revendication 1 dans lequel les première et seconde configurations d'orientation de débit sont réalisées par au moins l'une parmi :

- la distribution de rôles ciblés et de support à des tonalités des lignes de communication ; et
- le réglage du facteur de mise à l'échelle de gain des tonalités des lignes de communication.

6. Dispositif de commande de communication (151) selon la revendication 1 configuré en outre pour, lors de l'observation d'un trafic de pointe en rafales sur un sous-ensemble (510, 511) des lignes de communication, sélectionner une configuration s'accommodant des pointes du trafic de pointe en rafales sur le sous-ensemble des lignes de communication comme étant la première ou la seconde configuration d'orientation de débit, et pour sélectionner les quantités des premier et second symboles sur la base de rafales observées dans le trafic de pointe en rafales.

7. Dispositif de commande de communication (151) selon la revendication 1 configuré en outre pour, lors de la détection de lignes de communication corrélées (610, 611), sélectionner des configurations d'orientation de débit découplant les lignes de communication corrélées comme étant la première et la seconde configuration d'orientation de débit, et pour maximiser un débit de données minimal (626) sur toutes les lignes de communication par la sélection des quantités (231, 235) des premiers et seconds symboles.

8. Dispositif de commande de communication (151) selon la revendication 1 configuré en outre pour sélectionner les première et seconde configurations d'orientation de débit selon une première et une seconde politique d'orientation de débit équitable respective, et pour fournir un paramètre d'équité configurable, par la sélection des quantités (231, 235) des premiers et seconds symboles.

9. Dispositif de commande de communication (151) selon l'une quelconque des revendications précédentes comprenant au moins un processeur (702) et au moins une mémoire (704) incluant un code de programme d'ordinateur, l'au moins une mémoire et le code de programme d'ordinateur étant configurés pour, avec l'au moins un processeur, amener le dispositif de commande de communication (151) à fonctionner.

10. Nœud d'accès (100) comprenant le dispositif de commande de communication selon l'une quelconque des revendications précédentes.

11. Procédé pour la commande de communications sur des lignes de communication vectorisées comprenant la déduction (402) de premier et second ensembles de coefficients de vectorisation selon des première et seconde configurations d'orientation de débit (301 302) respectives pour la coordination d'une émission conjointe de premiers symboles (221 à 224) respectifs pendant un intervalle de fonctionnement normal (233), NOI, d'une trame temporelle (200) à l'aide du premier ensemble de coefficients de vectorisation et de seconds symboles (225, 226) pendant un intervalle de fonctionnement discontinu (234), DOI, de la trame temporelle à l'aide du second ensemble de coefficients de vectorisation sur des lignes de communication vectorisées ; et dans lequel la quantité et la position des seconds symboles dans la trame temporelle sont communes entre les lignes de communication ; et dans lequel les première et seconde configurations d'orientation de débit (301 302) réalisent une première et une seconde distribution respectives de débits de données sur les lignes de communication vectorisées.

Fig. 1

Fig. 2

Fig. 4

SELECT VECTORING POLICIES — 401

DERIVE / RETRIEVE VECTORING COEFFICIENTS — 402

SELECT TTR — 403

TRANSMIT FRAME(S) — 405

OBSERVE TRAFFIC — 404

Fig. 3

RATE USER 2 (Mbps)

RATE USER 1 (Mbps)

300, 301, 302, 303, 304

100, 50, 100, 200, 300, 400

Fig. 5

Fig. 6

EP 3 629 485 B1

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2016182122 A1